Europäisches Patentamt

European Patent Office

Office européen des brevets

(11) Numéro de publication: **0 388 491**

**A1**

## (12) DEMANDE DE BREVET EUROPEEN

(21) Numéro de dépôt: **89105120.3**

(22) Date de dépôt: **22.03.89**

(51) Int. Cl.5: **G01D 7/04**

(43) Date de publication de la demande:
**26.09.90 Bulletin 90/39**

(84) Etats contractants désignés:
**BE DE ES FR GB IT LU NL**

(71) Demandeur: **NATIONAL ELECTRONICS
(CONSOLIDATED) LIMITED
701, Admiralty Centre, Tower 1 18 Hardcourt
Road
Hong-Kong(HK)**

(72) Inventeur: **Kwan, Siu-Fan
1406 Tung on Building 171 Prince Edward
Road
Kowloon(HK)**

(74) Mandataire: **Robert, Jean S.
51, route du Prieur
CH-1257 Landecy (Genève)(CH)**

(54) **Procédé de réalisation d'un centre électronique d'affichage de données et centre électronique d'affichage de données.**

(57) Le centre d'affichage comprend un bâti (1), en matière plastique, dans l'épaisseur duquel sont ménagées des creusures (14) recevant chacune un module mécanique (15). Chaque module (15) comprend un moteur (16) et un rouage entraînant des organes indicateurs servant à 'affichage des différentes données que doit fournir l'appareil. Celui-ci comporte un substrat (26), en matière plastique, portant les éléments de commande des modules, tel qu'un oscillateur à quartz (30) si l'un des modules doit fournir des informations chronométriques, un microprocesseur (29), des sondes (31, 32, 33 et 34) de prise d'informations extérieures, des pistes conductrices (28) et deux piles électriques (27). Le procédé qui consiste à utiliser un bâti massif, à ménager dans une face de celui-ci des creusures destinées à recevoir des modules mécaniques très simples en eux-mêmes, et à appliquer sur le bâti un substrat portant des éléments de commande et des pistes conductrices entrant en contact avec les bornes d'alimentation des modules permet une grande souplesse dans la réalisation de centres d'affichage de données les plus diverses.

FIG. 2

# Procédé de réalisation d'un centre électronique d'affichage de données et centre électronique d'affichage de données.

La présente invention a pour objet un procédé de réalisation d'un centre électronique d'affichage de données ainsi qu'un centre électronique d'affichage de données.

Le but de l'invention est de fournir un moyen simple de réaliser des centres d'affichage de données, c'est-à-dire des appareils d'affichage fournissant des données les plus diverses, sans que la multiplication des données à afficher ne provoque une augmentation sensible de la complication de l'appareil non plus que de son prix de revient.

Ce but est atteint grâce aux moyens définis dans la revendication 1.

Le dessin illustre, à titre d'exemple, un mode de mise en oeuvre du procédé suivant l'invention.

La fig. 1 est une vue en plan d'un appareil d'affichage du temps et d'informations électriques.

La fig. 2 est une vue en plan d'un détail de cet appareil, schématiquement représenté, et

La fig. 3 est une coupe d'un détail à plus grande échelle.

L'appareil représenté comprend un bâti rectangulaire 1 portant, sur sa face antérieure, cinq cadrans d'affichage analogique 2, 3, 4, 5 et 6, en regard desquels se déplacent des aiguilles 7, 8 et 9 (cadran 2) pour l'indication du temps courant (heures, minutes et secondes), et des aiguilles 10, 11, 12 et 13 (cadrans 3 à 6, respectivement) indiquant une tension (volts), une intensité de courant (milli-ampères), une résistance électrique (ohms) et une fréquence (hertz), respectivement.

Le bâti 1, massif, en matière plastique, présente, ouvrant sur sa face antérieure, cinq creusures 14 destinées à recevoir chacune un module mécanique 15 d'entraînement des diverses aiguilles 7 à 13. Chaque module comprend un moteur électrique et un rouage entraîné par ledit moteur. L'enroulement de chacun de ces moteurs a été désigné par 16 et l'armature par 17.

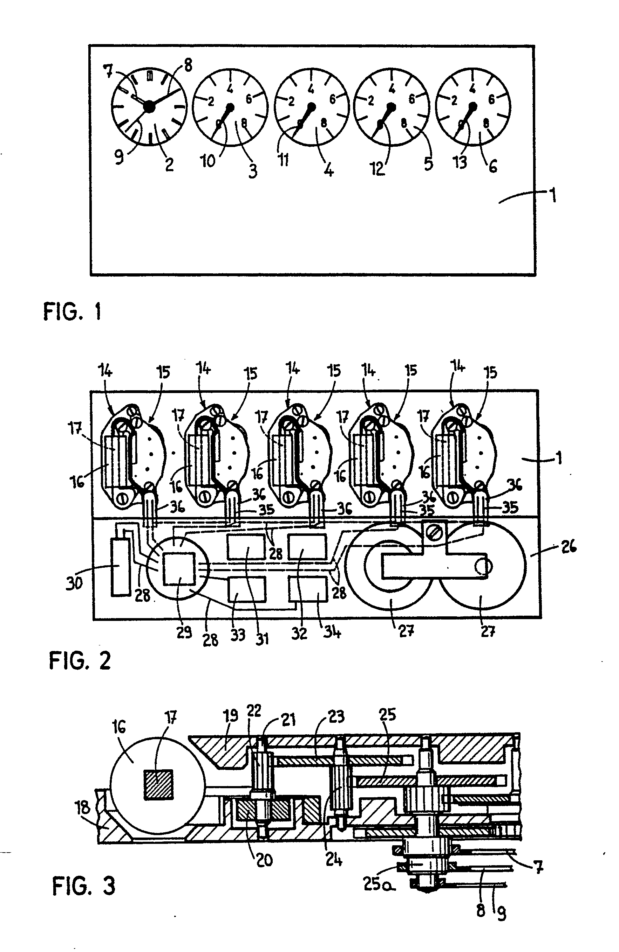

L'un des modules, en l'occurrence celui qui sert à entraîner les aiguilles 7, 8 et 9 d'affichage du temps courant (heures, minutes et secondes) a été représenté en coupe à la fig. 3. Le bâti de ce module comprend une platine 18 et un pont de rouage 19 entre lesquels est monté rotativement le rotor, désigné par 20, du moteur. L'arbre 21 de ce rotor porte un pignon 22 en prise avec une roue 23 d'un mobile intermédiaire dont le pignon, désigné par 24, engrène avec une roue de centre 25 solidaire d'un canon 25a portant l'aiguille des minutes 8.

La face antérieure du bâti 1 porte encore un substrat en matière plastique 26 portant lui-même deux piles électriques 27, des pistes conductrices 28, un micro-processeur 29, un garde-temps 30, en l'occurrence un oscillateur à quartz, pilotant le moteur du module commandant les aiguilles 7, 8 et 9, et des sondes de prise d'informations extérieures schématiquement représentées à la fig. 2 par de simples rectangles 31, 32, 33 et 34.

Les conducteurs alimentant les enroulements 16 des moteurs, désignés par 35, sont portés par des languettes élastiques 36 dont sont munis les modules 15, qui portent des bornes ou plots de contact avec lesquels les les pistes conductrices 28 du substrat 26 entrent élastiquement en contact lorsque le substrat est appliqué contre le bâti 1, ce qui assure l'alimentation des moteurs.

La présente invention, par le fait qu'elle permet de scinder les organes de commande des indicateurs, à savoir les modules mécaniques (moteurs et rouages), des moyens de pilotage et des éléments qui leur sont associés, tels que le ou les micro-processeurs, permet une grande souplesse dans la réalisation de l'appareil qui peut, sans surcroît de complication, être adapté à l'affichage de toutes sortes de données, les plus diverses, le cas échéant totalement indépendantes les unes des autres. De plus les modules mécaniques d'affichage sont d'une très grande simplicité.

En principe, les indicateurs (aiguilles) d'un dispositif d'affichage seront portés par le module qui les commande, mais on pourra prévoir le cas où un dispositif d'affichage pourra comporter des indicateurs commandés par deux modules différents, l'un d'eux commandant donc un ou des indicateurs portés par un autre module.

## Revendications

1. Procédé de réalisation d'un centre électronique d'affichage de données, caractérisé par le fait qu'on utilise un ensemble de modules mécaniques d'affichage comprenant chacun un moteur et un rouage entraîné par ledit moteur, que l'on dispose sur un support commun et que l'on alimente à l'aide d'au moins un circuit électronique monté sur un substrat qui porte des moyens de pilotage des moteurs desdits modules et des conducteurs électriques en contact avec les bornes d'alimentation de ceux-ci, ledit circuit électronique étant agencé de façon à fournir au moteur de chaque module des impulsions de commande propres à lui permettre d'entraîner un organe indicateur des informations qu'il doit afficher.

2. Procédé suivant la revendication 1, caractérisé par le fait qu'on utilise un support massif, en matière plastique, dans lequel on ménage des creusures destinées à recevoir lesdits modules.

3. Procédé suivant la revendication 2, caractérisé par le fait qu'on ménage lesdites creusures sur une seule et même face dudit support sur laquelle on place en outre ledit substrat.

4. Centre électronique d'affichage de données obtenu par la mise en oeuvre du procédé suivant la revendication 1.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 128 721  (BROCHIER) <br> * En entier * <br> --- | 1,4 | G 01 D   7/04 |
| Y | DE-A-2 715 154  (SMITHS INDUSTRIES) <br> * Revendications; figures * <br> --- | 1,4 | |
| Y | FR-A-2 404 250  (BERNEY) <br> * Revendications; figures * <br> --- | 1,4 | |
| E | CH-A-  670 737  (NATIONAL ELECTRONICS) <br> * En entier * <br> ------ | 1-4 | |

**DOMAINES TECHNIQUES RECHERCHES (Int. Cl.5)**

G 01 D
G 01 R
G 04 C

Le présent rapport a été établi pour toutes les revendications

| Lieu de la recherche | Date d'achèvement de la recherche | Examinateur |
|---|---|---|
| LA HAYE | 31-10-1989 | LLOYD P.A. |